# FASCICULE DE BREVET EUROPEEN

(11) **EP 1 096 464 B1**
(45) Date de publication et mention de la délivrance du brevet: **26.09.2007**
(21) Numéro de dépôt: 00402770.2
(22) Date de dépôt: 06.10.2000
(51) Int. Cl.: G09G 3/20, H04N 7/08, G06F 3/14, G09G 1/16, H04N 7/088

(54) **Procédé et dispositif d'affichage de caractères étendus pour le rafraîchissement d'une page télétexte**
Verfahren und Gerät zur Anzeige von erweiterten Zeichen für die Auffrischung von Teletextseiten
Method of and device for displaying extended characters to refresh a teletext page

(30) Priorité: 29.10.1999 FR 9913587
(43) Date de publication de la demande: 02.05.2001
(73) Titulaire: STMicroelectronics S.A., 92120 Montrouge (FR)
(72) Inventeur: Crespo, Thierry, 75116 Paris (FR); Tauzia, Vincent, 75116 Paris (FR)
(74) Mandataire: Ballot, Paul Denis Jacques

(56) Documents cités:
- EP-A- 0 362 940
- GB-A- 2 268 864

## Description

La présente invention concerne un procédé et un dispositif d'affichage de caractères étendus pour le rafraîchissement d'une page télétexte.

Elle se rapporte au domaine du télétexte, défini par exemple dans le standard ETS 300 706 de mai 1997 (ETS : de l'anglais "European Telecommunication Standard", qui signifie standard de télécommunication européen) ci-après incorporé par référence.

Le télétexte est un service annexe des chaînes de télévision destiné à transmettre des informations écrites (du texte) en plus des informations vidéo (des images) et des informations audio (du son). Ces informations écrites sont codées sous forme numérique. Elles sont transmises, par paquets de données, sur les fréquences vidéo dans des intervalles de temps correspondant aux retours de trame. Un paquet de données télétexte, ou paquet télétexte, est donc transmis toutes les 20 ms (millisecondes). Il est reçu et décodé par un décodeur télétexte compris dans ou relié à un récepteur de télévision ou téléviseur. Dit autrement, un paquet télétexte occupe la bande de fréquence allouée au signal de télévision pendant une durée correspondant à la durée de transmission d'une ligne d'écran.

L'écran d'un téléviseur permet l'affichage d'une page télétexte ayant 25 lignes et 40 colonnes, c'est à dire comprenant au plus 25x40=1000 caractères affichés. Néanmoins, une page télétexte est complètement décrite par plus de 25 paquets télétexte. En effet, pour la définition complète d'une page télétexte, il peut être transmis un nombre beaucoup plus important de paquets. Les paquets télétexte sont de différents types se distinguant par un numéro allant de 0 à 31, appelé numéro Y dans la terminologie du standard précité. Il est ainsi transmis :
- un paquet d'un premier type, dit paquet d'en-tête ("Header Packet", en anglais), pour lequel Y vaut 0, et qui contient notamment une information relative au numéro de la page ;
- puis, au plus vingt-cinq paquets d'un second type dits "paquets normaux " ("Normal Packets", en anglais) ou paquets d'affichage, pour lesquels Y vaut 1 à 25 respectivement, qui contiennent respectivement les caractères de niveau 1 (caractères normaux), pour l'affichage direct sur l'écran télévision ;
- et enfin selon les cas, des paquets d'un troisième type dits "non affichables" ("Non-Displayable Packets", en anglais), pour lesquels Y vaut 26, 27, 28, 29, 30 ou 31, et qui contiennent entre autre des informations d'amélioration de l'affichage ("Enhancement Data", en anglais).

Les paquets non affichables pour lesquels Y vaut 26 sont aussi appelés "paquets X/26", dans la terminologie du standard précité. Ils contiennent notamment des caractères étendus qui sont surimposés aux caractères normaux sur l'écran. Des caractères étendus sont en quelque sorte des caractères spéciaux, tels que "@", "µ", "#", "&","$", "£",... On les appelle aussi "caractères X/26" dans la terminologie du standard précité.

L'ensemble des paquets télétexte nécessaires à la définition de toutes les pages télétexte du service sont transmis successivement et de manière cyclique. Les pages d'un service télétexte sont éventuellement associées pour former des ensembles logiques appelés magazines. Lorsqu'on lance le service télétexte, le décodeur télétexte recherche automatiquement la page 100. Il s'agit d'une page de sommaire sur laquelle sont présentés les différents magazines disponibles, ainsi que le numéro de la première page de chacun d'eux. La page de sommaire est chargée dans une mémoire d'affichage du décodeur de télétexte. Celle-ci est lue en permanence par les moyens d'affichage de l'écran du téléviseur afin d'afficher son contenu sur ledit écran. Dit autrement, la page d'écran est à chaque instant l'image de la page télétexte mémorisée dans la mémoire d'affichage. Lorsque l'utilisateur sélectionne une autre page télétexte, celle-ci est chargée dans la mémoire d'affichage et, en conséquence, elle est affichée sur l'écran.

Lorsqu'une page télétexte est affichée sur l'écran, les données reçues, lors des cycles suivants, dans les paquets télétexte qui correspondent à cette page, sont chargées dans la mémoire d'affichage, soit directement soit indirectement. On connaît en effet deux modes différents pour l'affichage des pages télétexte.

Selon le premier mode, les pages télétextes sont chargées dans une mémoire tampon au fur et à mesure de la réception des paquets télétexte transmis lors d'un cycle complet. Pour l'affichage d'une page télétexte déterminée, les données correspondantes sont chargées depuis la mémoire tampon dans la mémoire d'affichage. Dit autrement, les données de la page télétexte à afficher transitent par une mémoire tampon. Ceci permet d'éviter des effets d'affichage indésirables, dus au fait que tous les caractères à afficher ne sont pas forcément reçus en des temps suffisamment rapprochés. Toutefois, il faut prévoir une mémoire tampon ayant une capacité de l'ordre de 1 kilo-octet (Ko) par page à stocker. Une telle mémoire tampon pénalise le coût des téléviseurs fonctionnant selon ce mode d'affichage. C'est pourquoi on lui préfère généralement le second mode d'affichage.

Selon ce second mode, les données de la page télétexte à afficher sont chargées directement dans la mémoire d'affichage, au fur et à mesure de la réception des paquets télétexte.

L'invention vise à résoudre un problème spécifique de l'utilisation des décodeurs de télétexte fonctionnant conformément à ce second mode d'affichage. Ce problème se présente lors du rafraîchissement de la page affichée. Par rafraîchissement de la page affichée, on entend le remplacement des caractères de la page affichée par les caractères définis par les paquets télétexte correspondant à cette même page qui sont reçus lors de chaque cycle ultérieur. Le rafraîchissement vise à faire en sorte que l'affichage tienne compte d'un éventuel changement du contenu ou de la présentation de ladite page affichée. Il permet aussi d'obtenir des effets d'animation de la page affichée.

On notera que, pour les caractères étendus comme pour les caractères normaux, l'ordre de réception des caractères est, par convention, et en considérant l'écran de télévision tel qu'il se présente aux yeux d'un utilisateur, l'ordre suivant : de la ligne du haut à la ligne du bas, et à l'intérieur de chaque ligne, de gauche à droite. Dans la suite et sauf mention contraire, les mots "premier", "dernier", "précédant", "suivant" ou similaires, sont utilisés en référence à cette convention.

Selon les procédés d'affichage connus, les caractères étendus compris dans la page affichée sont effacés globalement pour chaque ligne de la page, lors de la réception et du décodage du premier caractère étendu à afficher dans ladite ligne.

A titre d'illustration, on considère l'exemple d'un texte initialement affiché sur une ligne déterminée tel que représenté à la figure la. Cette ligne donne l'adresse de messagerie électronique imaginaire d'une société imaginaire appelée TOTO&Cie. Le texte de cette ligne comporte deux caractères étendus, à savoir les caractères "&" et "@".

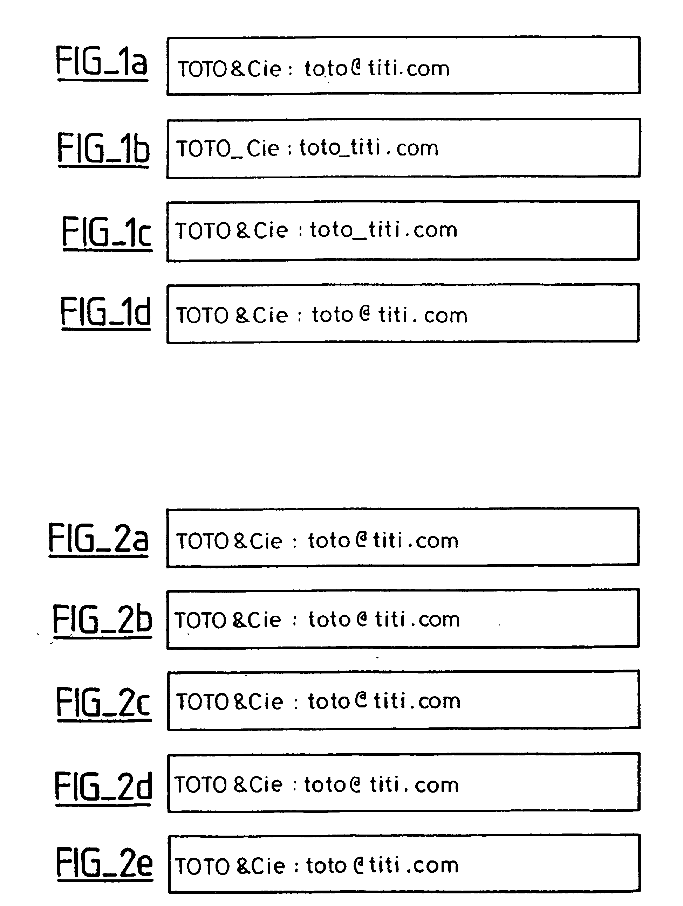

La première étape du rafraîchissement d'une ligne selon l'art antérieur consiste à effacer les deux caractères étendus "&" et "@", en sorte que, sur l'écran, la ligne apparaît telle que visible à la figure 1b. Sur cette figure, la position des caractères effacés est symboliquement repérée par un tiret en position basse. Bien entendu, à l'écran, c'est un espace qui apparaît, aux yeux de l'utilisateur, à ces positions.

Dans une deuxième étape, le caractère "&" est affiché à la suite de la réception et du décodage du paquet télétexte dans lequel il est codé et transmis. La ligne apparaît alors à l'utilisateur telle que représentée à la figure 1c.

Enfin, dans une troisième étape, le caractère "@" est affiché à la suite de la réception et du décodage du paquet télétexte dans lequel il est codé et transmis. La ligne apparaît alors à l'utilisateur telle que représentée à la figure 1d.

Un problème provient du fait que les paquets X/26 dans lesquels les caractères respectivement "&" et "@" sont codés et transmis ne sont pas forcément un seul et même paquet, ni même deux paquets X/26 consécutifs. Il en résulte que la durée écoulée entre la première étape et la deuxième étape, et/ou entre la première étape et la troisième étape, peut être supérieure à la période de rémanence rétinienne (la rémanence rétinienne est la propriété de la rétine de l'oeil humain de ne pas percevoir les variations d'une image qui se produisent à une fréquence supérieure à un certain seuil). L'effet visuel qui en découle pour l'utilisateur est donc un effet de scintillement ("Flicker", en anglais). Cet effet étant désagréable pour l'utilisateur, il constitue un effet d'affichage indésirable.

On notera qu'un tel problème ne se pose que lors du rafraîchissement d'une page télétexte précédemment affichée. En effet, lors de la sélection par l'utilisateur d'une nouvelle page télétexte, la mémoire d'affichage est effacée puis les données de la nouvelle page télétexte à afficher y sont chargées au fur et à mesure de la réception des paquets télétexte correspondants. De la sorte, il ne se produit aucun effet d'affichage indésirable. Il en va de même, bien entendu, lors de l'affichage de la première page télétexte (la page de sommaire) après le lancement du service télétexte. Par ailleurs, il est bien évident, comme on l'a déjà mentionné plus haut, qu'un tel problème ne se pose pas dans le cas des dispositifs télétexte avec mémoire tampon.

L'invention vise à résoudre le problème précité qui est inhérent aux procédés connus d'affichage de caractères étendus pour le rafraîchissement d'une page télétexte, tels qu'ils sont mis en oeuvre dans les dispositifs sans mémoire tampon connus dans l'état de la technique.

Le document EP 0 362 940 décrit un example de decodeur Télétexte.

A cet effet, l'invention propose un procédé d'affichage de caractères étendus pour le rafraîchissement d'une page télétexte, qui comporte, successivement pour chacun des caractères étendus à afficher dans une ligne déterminée de la page télétexte, les étapes consistant à :
a) effacer les caractères étendus présents dans la ligne entre la position d'affichage dudit caractère étendu à afficher et une position antérieure déterminée, cette dernière non comprise, ladite position antérieure déterminée étant la position d'affichage du caractère étendu précédant, dans ladite ligne déterminée, ledit caractère étendu à afficher, ou, à défaut, la position d'affichage du premier caractère de ladite ligne ;
b) afficher le caractère étendu à afficher à sa position d'affichage.

De cette manière, on n'efface lors d'un rafraîchissement de la page télétexte, que les caractères étendus qui, le cas échéant, doivent disparaître. Ainsi aucun effet de scintillement n'est visible par l'utilisateur.

D'autres caractéristiques et avantages de l'invention apparaîtront à la lecture de la description qui va suivre. Celle-ci est purement illustrative et doit être lue en regard des dessins annexés, sur lesquels on a représenté :
- aux figures 1a à 1d, déjà analysées : une ligne d'une page télétexte telle qu'elle apparaît à l'écran lors d'un rafraîchissement selon un procédé connu dans l'art antérieur ;
- aux figures 2a à 2e : la même ligne telle qu'elle apparaît à l'écran lors d'un rafraîchissement selon le procédé de l'invention ;
- à la figure 3 : le schéma d'un organigramme montrant les étapes du procédé selon l'invention ;
- à la figure 4 : le schéma d'un dispositif pour la mise en oeuvre du procédé selon l'invention.

Dans la suite du présent exposé, on entend par affichage d'un caractère à sa position active (notée r/c dans le standard précité), le fait d'écrire dans la mémoire d'affichage du dispositif télétexte, à l'adresse correspondant à cette position, le code correspondant audit caractère (codé sur sept bits de données D0-D6) dans un jeu de caractères déterminé. De même, on entend par effacement d'un caractère le fait d'écrire, à l'adresse de la mémoire d'affichage correspondant à la position active dudit caractère, le code correspondant à un espace (un "blanc"). L'adresse active r/c comporte une première composante r et une seconde composante c qui sont respectivement le numéro de la ligne et le numéro de la colonne de l'écran télétexte auxquelles appartient le caractère. On notera que r est compris entre 1 et 25, alors que c est compris entre 1 et 40.

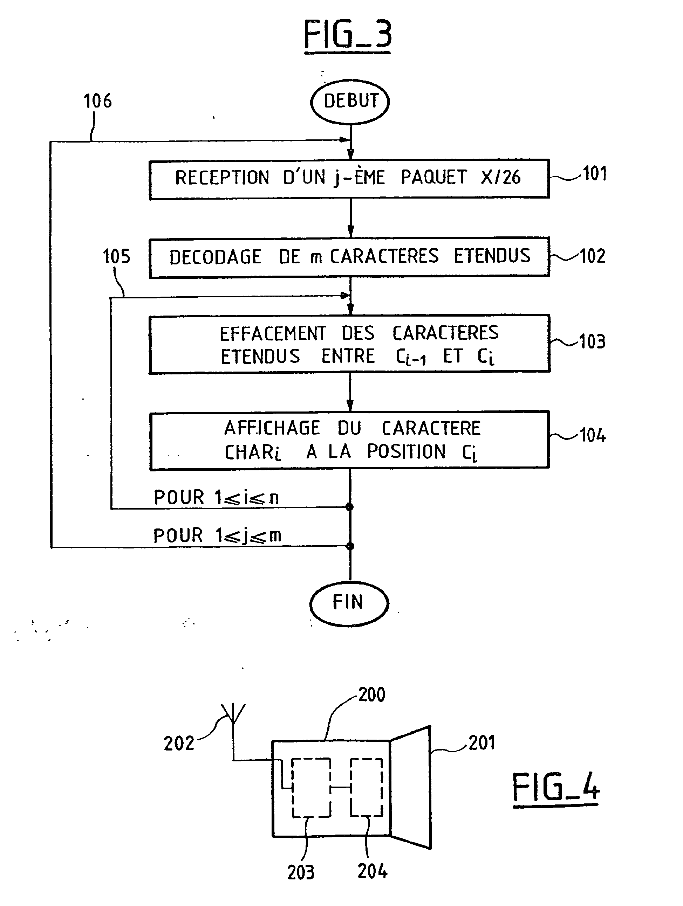

Le procédé et le dispositif selon l'invention sont décrits ci-dessous respectivement en regard de l'organigramme de la figure 3 et du schéma de la figure 4.

Un paquet télétexte comprend 360 bits organisés en 45 octets numérotés 1 à 45. Dans chaque octet, les bits sont numérotés 1 à 8, respectivement en partant du bit de poids le plus faible (LSB) à celui de poids le plus fort (MSB). Les bits sont normalement transmis en commençant par le bit 1. Les paquets non affichables, ou paquets X/26, ont un format spécifique décrit au paragraphe 9.4 et à la figure 11 page 29 du standard précité. Selon ce format, un paquet comprend treize triplets d'octets pour transmettre les informations d'amélioration de l'affichage proprement dites. Chaque triplet définit un caractère X/26. En réalité, seuls dix-huit des vingt-quatre bits du triplet sont des bits efficaces. Parmi ceux-ci :
- six bits sont des bits codant le numéro de la colonne de l'écran télétexte à laquelle appartient le caractère à afficher, c'est à dire la position d'affichage du caractère dans la ligne courante ;
- cinq bits sont des bits de mode, définissant le mode d'affichage (accentué, ou autre) ou bien une commande de changement de la ligne courante, ce changement étant obtenu par l'incrémentation d'un compteur de ligne du dispositif ;
- et sept bits de données D0-D6 codant le caractère à afficher dans un jeu de caractères déterminé.

Les étapes essentielles du procédé selon l'invention sont précédées de deux étapes 101 et 102 non essentielles à la résolution du problème technique. Ces étapes 101 et 102 consistent respectivement à recevoir et à décoder un paquet X/26 pour en déduire au moins un caractère étendu à afficher dans au moins une ligne de l'écran télétexte, ainsi que sa position active. Cette position active est plus particulièrement définie par la valeur courante du compteur de ligne du dispositif d'une part, et par la position d'affichage du caractère dans la ligne courante d'autre part.

On note ci la position d'affichage, dans la ligne courante, du i-ème caractère étendu à afficher dans cette ligne. De même, on note CHARᵢ le code de ce caractère, défini par les bits D0-D6. L'indice i est supérieur ou égal à l'unité. Il est compris entre 1 et n, où, dans un exemple simple conforme à la figure 3, n est le nombre de caractères étendus décodés dans le j-ième paquet X/26 reçu à l'étape 101. L'indice j est compris entre 1 et m, où m est le nombre de paquets X/26 nécessaires à la définition de la page télétexte. Dans l'exemple décrit aux figures, m est égal à l'unité et n est égal à deux. Dit autrement, on note C₁ la position d'affichage, dans la ligne courante, du premier caractère étendu "&" à afficher dans cette ligne. De même, on note C₂ la position d'affichage du second caractère étendu "@" à afficher dans la ligne courante. Le code de ce caractère est noté CHAR₂. Par ailleurs, on note c₀ la position du premier caractère de la ligne courante.

Après l'étape 102, le procédé comprend, selon l'invention, successivement pour chacun des caractères étendus CHARᵢ à afficher dans la ligne courante de la page télétexte, deux étapes essentielles 103 et 104.

L'étape 103 consiste à effacer les anciens caractères étendus présents dans ladite ligne courante entre la position d'affichage ci du nouveau caractère étendu CHARᵢ à afficher et une position antérieure déterminée, cette dernière non comprise. La position antérieure déterminée susmentionnée est la position d'affichage Cᵢ₋₁ du nouveau caractère étendu CHARᵢ₋₁ précédant dans la ligne ledit caractère étendu à afficher CHARᵢ ou à défaut la position c₀ du premier caractère de la ligne courante. Cette position est repérée par la valeur mémorisée dans un registre adapté du dispositif. Initialement, ce registre mémorise la valeur de la position d'affichage c₀ du premier caractère de la ligne.

L'étape 104 consiste à afficher le caractère étendu à afficher CHARᵢ à sa position d'affichage ci dans la ligne courante. Le caractère éventuellement présent à cette position est simplement écrasé. Dans le cas d'un rafraîchissement sans modification de la ligne, il s'agit du même caractère. Mais, dans le cas d'un rafraîchissement avec modification de la ligne, il peut s'agir d'un autre caractère, éventuellement un caractère normal d'ailleurs.

La ligne courante est celle qui est définie par la valeur du compteur de ligne du dispositif. Ce compteur est incrémenté après décodage d'un triplet du paquet X/26 reçu, dans lequel les bits de modes codent une commande prédéterminée prévue à cet effet. A ce moment également, la valeur c₀ est écrite dans le registre précité du dispositif.

Les étapes 103 et 104 sont répétées pour chaque caractère étendu décodé à l'étape 102, c'est à dire pour i allant de 1 à n. A la figure 3, ceci est symbolisé par la flèche 105.

Comme on l'a dit plus haut, les caractères étendus à afficher dans une ligne déterminée de l'écran peuvent être transmis dans plus d'un paquet X/26, notamment si il y en a plus de treize. Dans ce cas m est supérieur à l'unité. Donc les étapes 101 à 104 peuvent également être répétées pour l'affichage de tous les caractères étendus d'une ligne déterminée, et, le cas échéant, pour l'affichage des caractères étendus de toutes les lignes de la page télétexte qui en comportent. Dit autrement, les étapes 101 à 104 sont répétées pour j allant de 1 à m. A la figure 3, ceci est symbolisé par la flèche 106.

Ce qu'il est important de noter toutefois, c'est que le procédé est mis en oeuvre ligne par ligne, et au fur et à mesure de la réception des paquets X/26. De plus, et surtout, il est à noter que la durée écoulée entre l'étape 103 et l'étape 104 est toujours inférieure à la durée de traitement d'un paquet télétexte, à savoir 20 millisecondes. Dit autrement, la durée pendant laquelle un caractère étendu disparaît avant d'être à nouveau affiché est inférieure à 20 millisecondes. Cette durée est assez faible pour que la rémanence rétinienne empêche tout effet de scintillement visible par l'utilisateur.

Pour illustrer cet avantage du procédé selon l'invention, on a représenté aux figures 2a à 2e la ligne de caractères de la figure 1a, telle qu'elle est affichée à l'écran lors d'un rafraîchissement sans modification conformément à l'invention.

La figure 2a montre cette ligne telle qu'elle apparaît au début. La figure 2b montre la même ligne telle qu'elle apparaît après la première itération de l'étape 103, à savoir celle relative au premier caractère étendu "&" et pour laquelle i vaut 1. La figure 2c montre cette ligne après la première itération de l'étape 104. La figure 2d montre cette ligne après la seconde itération de l'étape 103, à savoir celle relative au second caractère étendu "@" et pour laquelle i vaut 2. Enfin la figure 2e montre cette ligne après la seconde itération de l'étape 104.

On notera que, dans cet exemple, aucun caractère étendu n'est effacé puisqu'il s'agit d'un rafraîchissement sans modification de la ligne. Dans le cas d'un rafraîchissement avec modification de la ligne (non représenté) un caractère étendu qui aurait été présent par exemple entre le premier caractère de la ligne et le caractère "&" (et qui donc aurait été visible à la figure 2a) et qui ne devrait plus l'être après le rafraîchissement, aurait disparu à la figure 2b pour ne plus réapparaître.

Dans une variante du procédé, on efface également le caractère étendu présent à la position d'affichage ci du caractère étendu à afficher CHARᵢ. Selon cette variante, le caractère "&" et le caractère "@" disparaissent respectivement à la figure 2b et à la figure 2d, les autres figures 2a, 2c et 2e restant identiques. Cette variante n'entraîne pas d'effet de scintillement visible par l'utilisateur. En effet, le caractère initialement présent à la position ci est, le cas échéant, remplacé par le caractère étendu à afficher CHARᵢ tel qu'il a été reçu et décodé. Or, l'affichage de ce dernier conformément à l'étape 104 est réalisé au plus tard dans les 20 millisecondes qui suivent. Donc il n'y a pas d'effet de scintillement visible par l'utilisateur. Cette variante peut être avantageuse dans certains cas particuliers.

A la figure 4, on a représenté le schéma d'un dispositif pour la mise en oeuvre du procédé décrit ci-dessus. Un tel dispositif comprend par exemple un téléviseur 200 avec un écran 201, une antenne de réception 202 couplée à un décodeur de télétexte 204 par l'intermédiaire d'un démodulateur de signaux de télévision 203. Le décodeur comporte une mémoire d'affichage (non représentée) qui, comme il a déjà été dit, est lue en permanence par les moyens d'affichage de l'écran.

Le décodeur est par exemple un décodeur de la famille ST92195 commercialisé par la société STMicroelectronics SA. Un tel décodeur comprend notamment une cellule d'acquisition des données et une cellule de traitement des données par logiciel. Le procédé selon l'invention est alors avantageusement mis en oeuvre par des moyens logiciels du décodeur, sous la forme d'un programme d'ordinateur ayant pour effet technique le rafraîchissement de la page télétexte affichée sans effet de scintillement visible par l'utilisateur.

Néanmoins, le procédé selon l'invention peut aussi être mis en oeuvre à l'aide d'un décodeur de télétexte comprenant des moyens matériels prévus à cet effet, tels qu'un assemblage adapté de portes logiques, de circuits logiques, et autres.

## Revendications

1. Procédé d'affichage de caractères étendus pour le rafraîchissement d'une page télétexte, **caractérisé en ce qu'**il comporte, successivement pour chacun des caractères étendus à afficher dans une ligne déterminée de la page télétexte, les étapes consistant à :
a) effacer les caractères étendus présents dans la ligne entre la position d'affichage (cᵢ) dudit caractère étendu à afficher (CHARᵢ) et une position antérieure déterminée, cette dernière non comprise, ladite position antérieure déterminée étant la position d'affichage (cᵢ₋₁) du caractère étendu (CHARᵢ₋₁) précédant dans ladite ligne déterminée ledit caractère étendu à afficher ou à défaut la position d'affichage (c₀) du premier caractère de ladite ligne ;
b) afficher le caractère étendu à afficher (CHARᵢ) à sa position d'affichage (cᵢ).

2. Procédé selon la revendication 1, **caractérisé en ce que**, à l'étape a) on efface également le caractère étendu présent à la position d'affichage du caractère étendu à afficher.

3. Dispositif comprenant un écran (201), une antenne de réception (202) couplée à un décodeur de télétexte (204) par l'intermédiaire d'un démodulateur de signaux de télévision (203), **caractérisé en ce que** le décodeur de télétexte (204) comprend des moyens pour la mise en oeuvre d'un procédé selon l'une des revendications 1 ou 2.

4. Dispositif selon la revendication 3, **caractérisé en ce que** lesdits moyens sont des moyens matériels.

5. Dispositif selon la revendication 3, **caractérisé en ce que** lesdits moyens sont des moyens logiciels.

## Claims

1. Method for displaying extended characters for refreshing a teletext page, **characterized in that** it comprises successively for each of the extended characters to be displayed in a determined line of the teletext page the steps consisting in:
a) erasing the extended characters present in the line between the display position (cᵢ) of said extended character to be displayed (CHARᵢ) and a determined prior position, the latter not included, said prior determined position being the display position (cᵢ₋₁) of the extended character (CHARᵢ₋₁) preceding, in the determined line, said extended character to be displayed or, failing that, the display position (cₒ) of the first character of the line;
b) displaying the extended character to be displayed (CHARᵢ) at its display position (Cᵢ).

2. Method according to claim 1, **characterized in that**, in step a), the extended character present at the display position of the extended character to be displayed is also erased.

3. Device comprising a screen (201), a reception antenna (202) coupled to a teletext decoder (204) by means of a television signal demodulator (203), **characterized in that** the teletext decoder (204) comprises means for implementing a method according to one of claims 1 or 2.

4. Device according to claim 3, **characterized in that** said means are material means.

5. Device according to claim 3, **characterized in that** said means are software means.

## Patentansprüche

1. Verfahren zum Anzeigen von erweiterten Zeichen zum Auffrischen einer Teletextseite, **dadurch gekennzeichnet, dass** es, nachfolgend für jeden der anzuzeigenden erweiterten Zeichen in einer Zeile, die von der Teletextseite bestimmt ist, die Schritte umfasst, welche bestehen aus:
a) Löschen der gegenwärtigen erweiterten Zeichen in einer Zeile zwischen der Anzeigeposition (c;) des anzuzeigenden erweiterten Zeichens (CHARᵢ) und einer bestimmten vorherigen Position, wobei diese letztere nicht umfasst ist, wobei die bestimmte vorherige Position die Anzeigeposition (cᵢ₋₁) des erweiterten Zeichens (CHARᵢ₋₁) ist, das in der bestimmten Zeile dem anzuzeigenden erweiterten Zeichen vorhergegangen ist oder, mangels der Anzeigeposition (c₀), dem ersten Zeichen der Zeile;
b) Anzeigen des anzuzeigenden erweiterten Zeichens (CHARᵢ) an seiner Anzeigeposition (cᵢ).

2. Verfahren gemäß Anspruch 1, **dadurch gekennzeichnet, dass** man bei Schritt a) auch gleichermaßen das erweiterte Zeichen an der Anzeigeposition des anzuzeigenden erweiterten Zeichens löscht.

3. Vorrichtung, umfassend eine Anzeige (201), eine Empfangsantenne (202), die an einen Teletext-Dekoder (204) durch Zwischenschaltung eines Demodulators von Fernsehsignalen (203) gekoppelt ist, **dadurch gekennzeichnet, dass** der Teletext-Dekoder (204) Mittel zur Ausführung eines Verfahrens gemäß einem der Ansprüche 1 oder 2 umfasst.

4. Vorrichtung gemäß Anspruch 3, **dadurch gekennzeichnet, dass** die Mittel Sachmittel sind.

5. Vorrichtung gemäß Anspruch 3, **dadurch gekennzeichnet, dass** die Mittel Softwaremittel sind.
